# EUROPEAN PATENT SPECIFICATION

(11) **EP 1 571 828 B1**
(45) Date of publication and mention of the grant of the patent: **08.10.2014**
(21) Application number: 05101193.0
(22) Date of filing: 17.02.2005
(51) Int. Cl.: G03G 15/01, H04N 1/54

(54) **System and method for processing a multi-colour image**
Vorrichtung und Verfahren zur Verarbeitung eines mehrfarbigen Bildes
Système et méthode de traitement d'une image multicolore

(30) Priority: 03.03.2004 EP 04075679
(43) Date of publication of application: 07.09.2005
(73) Proprietor: Océ-Technologies B.V., 5914 CC Venlo (NL)
(72) Inventor: Gerrits, Carolus E.P., 5941-CH, Velden (NL)
(74) Representative: Vanoppen, Ronny R.J.

(56) References cited:
- EP-A- 0 373 704
- EP-A- 0 741 490
- US-B1- 6 459 501
- OSTROMOUKHOV V: "CHROMATICITY GAMUT ENHANCEMENT BY HEPTATONE MULTI-COLOR PRINTING" PROCEEDINGS OF THE SPIE, SPIE, BELLINGHAM, VA, US, vol. 1909, June 1993 (1993-06), pages 139-151, XP000980466 ISSN: 0277-786X

## Description

### FIELD OF THE INVENTION

The present invention is related to the processing of multi-colour images for reproduction on a printing or copying system. Particularly of interest are systems provided with at least five process colours for rendering these multi-colour images.

### BACKGROUND OF THE INVENTION

Hereinafter, reference will be made to a multi-colour reproduction system being a multi-colour printing and/or copying system. In this disclosure colour means all colours including black and white and all shades of grey. In digital colour printing, continuous tones are rendered by halftoning the separation images in the process colours. The process colours are a limited number of colours of marking particles available on the multi-colour image reproduction system to render a colour image. Usually a distinction can be made among colour printing systems based on the kind of marking particles used, e.g. ink or toner, the imaging process employed, e.g. magnetography, or electro(photo)graphy, or inkjet, the productivity or the media range. A distinction can however also be made dependent on the available number of process colours. The process colours correspond to the colours of the respective coloured marking particles available in the system such as e.g. black, white, cyan, magenta, yellow, orange, pink, red, green and blue. By selecting a number of process colours for a colour image reproduction system, one fixes the range of colours which can be produced by the colour image reproduction system, or in other words the gamut. Most image reproduction systems employ the three classic chromatic colours cyan (C), magenta (M) and yellow (Y), i.e. the so-called subtractive colours, and in most cases additionally black (K). The achievable gamut with the process colours cyan, magenta, yellow and black is usually more restricted than the gamut of the image to be reproduced. To extend the gamut more process colours need to be added. Typical process colour sets existing nowadays include sets of cyan, magenta, yellow and red, or of cyan, magenta, yellow, orange and green, or of the subtractive colours and red (R), green (G) and blue (B), the so-called additive colours, to extend the gamut respectively in the red, green and blue colours. To each of the afore-mentioned sets the process colour black may be added.

When reproducing colour images, and particularly contone images, these images are processed by the colour image reproduction system such as to generate digital colour separation images in the process colours. The respective digital colour separation images are halftoned for enabling printing. Usually each colour separation image is halftoned using a different screen. A disadvantage of this approach employing a plurality of different screens is its sensitivity for creating Moiré patterns. Moiré patterns are visible distortions in a rendered multi-colour image caused by interference patterns generated by combining halftone screens. Although it is known that the visible effect of Moiré patterns can be reduced by angling the halftone screens using predetermined screen angles, avoiding Moiré becomes particularly troublesome in colour image reproduction systems where four or more process colours can be printed. Thus in order to avoid Moiré the number of screens should be limited. To meet this requirement, nowadays multi-colour image reproduction systems provided with the process colours yellow, magenta, cyan, red, green, blue and black exist wherein colour images are printed using the approach as for instance disclosed by Victor Ostromoukhov in "Chromaticity gamut enhancement by heptatone multi-color printing", SPIE Proceedings 1993, Vol. 1909, pp.139-151. According to this approach each pixel of a colour image is printed using a selection of at most three out of seven process colours, namely two chromatic colours: one additive primary colour (one of RGB) and one subtractive secondary colour (one of YMC) and an achromatic colour: black (K). As a consequence, in the heptatone printing process as disclosed by Ostromoukhov the available gamut is divided in six sub-gamuts: KRY, KRM, KBM, KBC, KGC and KGY. A first disadvantage of this approach is that a grey tone can only be printed with dots of black marking particles and thus, particularly at low image densities, the printed images are highly sensitive to graininess. Graininess is a perceived feature of a rendered colour which is among others related to how uniformly the coloured marking particles have been formed on the medium. Apart from image coverage, lightness differences and particularly unintentional variations in lightness differences determine to a large extent the amount of graininess. The higher the lightness differences are the more sensitive the printed images are with respect to graininess. Lightness differences include differences in lightness between non-overlapping dots of marking particles of different process colours, and in case superimposed multi-colour image reproduction systems are used, differences in lightness between non-overlapping dots of superimposed marking particles of different process colours. Usually the primary source for graininess is the lightness difference between the darkest colour, for instance black, and the lightest process colour present in the image such as for instance yellow.

A further disadvantage of the approach disclosed by Ostromoukhov is that each sub-gamut comprises only two chromatic process colours and thus a coloured pixel can only be printed with at most two chromatic process colours. Besides that the availability of only two chromatic process colours negatively affects graininess at low image densities, this also limits the ability for faithful colour reproduction of for instance photos and particularly e.g. image parts of light shades of pastel colours.

EP 0741490A1 discloses a method for rendering a specific colour on a colour output system having at least four chromatic colorants. To enable executing the method, subsets of at most three colorants are defined for which corresponding disjunctive sub-gamuts are established. After determining in which sub-gamut the specific colour is located, the specific colour is rendered with the corresponding subset of colorants.

### OBJECTS OF THE INVENTION

It is an object of the invention to provide a system and method for processing multi-colour images for the reproduction thereof on a colour image reproduction system provided with at least five process colours with no or at least a limited sensitivity for graininess, particularly at low image densities.

It is a further object of the present invention to provide a system and method for processing digital multi-colour images for the reproduction thereof on a colour image reproduction system provided with at least five process colours wherein each pixel of the multi-colour images is rendered using up to three chromatic process colours while avoiding or at least limiting Moiré.

### DESCRIPTION OF THE INVENTION

In an aspect of the invention, an image processing system is disclosed for processing a digital multi-colour image for reproduction thereof on a colour image reproduction system according to claim 1.

It is observed that the most faithful colour reproductions can be obtained when the first process colour and the second process colour are positioned adjacent to each other in a predetermined colour space. The available gamut is the gamut defined by all available process colours and may include chromatic as well as achromatic process colours. The achromatic colours are black, white and all shades of grey. In other words, the achromatic colours are all colours positioned substantially on the grey axis being the line connecting the white point with the black point.

According to the present invention, each sub-gamut is defined by a set of three chromatic process colours. An additional process colour may be added to the set of process colours defining the sub-gamut, dependent on the judgement of the analysis module. For each pixel of the multi-colour image a corresponding sub-gamut is selected and a judgement is performed by the analysis module whether or not to add an additional process colour to the set of process colours defining this corresponding sub-gamut. When it is judged for a pixel that no additional process colour is to be added, then this pixel is rendered using up to three chromatic process colours. In such case the black process colour is not used which is advantageous with respect to graininess, particularly in low density image regions or highlight areas. The analysis judges whether a pixel is part of such highlight area or not. Therefore, in an embodiment of the invention, the analysis module determines for each pixel of the digital multi-colour image a lightness value and, if the lightness value is smaller than a predetermined lightness threshold, a judgement is made to add the additional process colour to the set of process colours defining the corresponding sub-gamut of said pixel. The lightness threshold may be chosen independent of the sub-gamut. Alternately, a different lightness threshold may be chosen for some or all sub-gamuts e.g. dependent on the lightness values of the respective process colours defining the sub-gamut. One may even opt for a lightness threshold which varies from pixel to pixel, e.g. dependent upon the shortest distance between the position of the pixel in a predetermined colour space
and the grey axis. The lightness threshold is typically a lightness value in the range from 20 to 90, or from 40 to 80. In another embodiment of the invention, the analysis module determines for each pixel of the digital multi-colour image an area coverage value and, if the area coverage value equals or exceeds a predetermined area coverage threshold, a judgement is made to add the additional process colour to the process colours defining the corresponding sub-gamut of said pixel. The area coverage threshold may be chosen independent of the sub-gamut. Alternately, a different area coverage threshold may be chosen for some or all sub-gamuts. One may even opt for an area coverage threshold which varies from pixel to pixel. The area coverage threshold is typically a value in the range from 20% to 200%, or from 20 % to 100%. When a pixel has an area coverage value of 100%, then to reproduce the pixel an area corresponding to the size of the pixel is to be fully covered with (a) dot(s) of marking particles. When the area coverage value of a pixel exceeds 100%, overlapping dots of marking particles are to be formed.
When the analysis module judges that an additional process colour is to be added to the set of process colours defining the corresponding sub-gamut of a pixel, then a non-white achromatic process colour, such as for instance black, or blue is added as additional process colour. Obviously, Blue can only added to the set of process colours defining a sub-gamut if that set does not already include blue. When a relatively small fraction of the additional process colour is to be added, then blue is preferred over black as additional process colour as blue has higher lightness compared to black and thus contributes less to graininess.

In an embodiment of the invention, the image processing according to the present invention further comprises a conversion module for converting the image signals of the respective process colours into corresponding printing signals by a halftoning technique using at most four different screens and wherein each image signal is converted into a corresponding printing signal using one screen selected from said at most four different screens.

In another aspect of the invention, a method is disclosed for processing a digital multi-colour image for reproduction thereof on a colour image reproduction as claimed in the independent method claim 8.

### BRIEF DESCRIPTION OF THE DRAWINGS

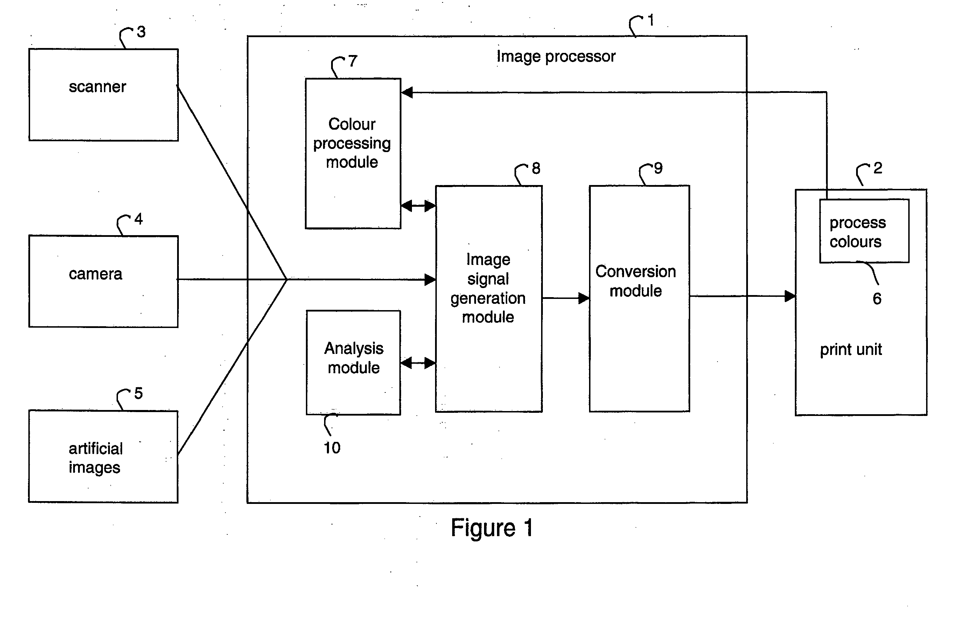

Figure 1 depicts a schematic representation of a colour image reproduction system according to the present invention.

### DETAILED DESCRIPTION OF EMBODIMENTS

In relation to the appended drawings, the present invention is described in detail in the sequel. Several embodiments are disclosed. It is apparent however that a person skilled in the art can imagine several other equivalent embodiments or other ways of executing the present invention, the scope of the present invention being limited only by the terms of the appended claims.

According to an embodiment of the invention, a digital colour image reproduction system, as depicted in figure 1 comprises an image processing system(1) and a printing unit (2). A digital multi-colour image may be offered to the digital image reproduction system for reproduction thereof. There are numerous ways to generate a digital image. For instance, a digital image may be generated by scanning an original using a scanner (3). The scanner can be part of the digital image reproduction system or may be coupled via a network or any other interface to the digital image reproduction system. Digital still images may also be generated by a camera or a video camera (4) which may be coupled via a network or any other interface, e.g. an IEEE1394 interface, to the digital image reproduction system. Besides digital images generated by a scanner or a camera, which are usually in a bitmap format or a compressed bitmap format also artificially created, e.g. by a computer program, digital images or documents (5) may be offered to the digital image reproduction system. The latter images are usually in a structured format including but not limited to a page description language (PDL) format and an extensible markup language (XML) format. Examples of a PDL format are PDF (Adobe), PostScript (Adobe), and PCL (Hewlett-Packard).
Regardless of the origin of the digital image one may opt to store the digital image in a memory such that it can be easily retrieved by the image processing system either directly or via any interface.

The colour gamut that can be rendered by the digital image reproduction system depends on the number of process colours (6) and their respective colour values. The process colours (6) correspond to the colours of the marking particles available in the printing unit (2). Although the invention is clearly not limited thereto, suppose by means of example that the process colours (6) available are the additive colours Red, Green, Blue, the subtractive colours Cyan, Magenta and Yellow and the achromatic colour blacK. The maximum colour gamut can be achieved by rendering each pixel of a digital image using all the process colours. The selection module (7) divides the colour gamut achievable with these seven process colours on the digital image reproduction system into a plurality of sub-gamuts. This division is such that each sub-gamut is defined by a set of three chromatic process colours of the plurality of process colours. Some or all of these sub-gamuts may be at least partially overlapping. This means that points in a predetermined colour space may be contained in plural sub-gamuts. The colour processing module determines for each such point the corresponding sub-gamut by selecting one of these plural sub-gamuts. An additional process colour may be added to each set of process colours defining the sub-gamuts. With known techniques a colour management system (not shown) may be used to match each pixel of a digital image with a point in the predetermined colour space. Thus each pixel can be rendered using up to four out of the seven available process colours without restricting the colour gamut of the digital image reproduction system. Whether or not an additional colour, such as for instance black or blue, is added to the set of three chromatic process colours defining a sub-gamut is determined by an analysis module (10).

The image signal generator (8) of the image processing system generates a sequence of image signals for the process colours (6). Each image signal has a one to one relationship with a separation image of a particular process colour. The image signal specifies at least an image density value for the associated process colour for each pixel of the digital image. The image density value for the associated process colour for a pixel of the digital image is zero if that associated process colour is not part of the sub-gamut which is selected for that pixel by the colour processing module (7). An image density value is typically an 8-bit value which enables the use of 256 grey levels per process colour. The pixel size is usually the same for each process colour and, although not required, is usually chosen or tuned such that the pixel size corresponds to the image dot size of the printing unit. Preferably the sequence wherein the image signals are generated corresponds to the sequence wherein the separation images of coloured marking particles are formed by the printing unit.

The conversion module (9) converts the sequence of image signals by means of a halftone technique into a sequence of corresponding printing signals. Each printing signal indicates for each associated process colour for each pixel of the digital image whether an image dot of marking particles of that process colour is to be formed. This indication may be done using a single bit or multi-bit value dependent on the halftoning capabilities of the printing unit. If the printing unit is capable of multi-level halftoning, a multi-bit value may be used, where the number of bits relates to the number of grey levels which can be reproduced per image dot of marking particles by the printing unit. Usually the printing unit is only capable of binary halftoning or in other words a single bit value, i.e. "0" or "1", indicates whether an image dot is to be formed or not. In principle, the image signals may be converted into printing signals by any halftone technique. Examples of halftoning techniques are matrix-dithering, stochastic dithering, and error-diffusion or any combination thereof. Matrix dithering produces a raster of pixels arranged in a regular matrix structure of several different threshold values. In particular, a printing signal is built up from a raster of a two-dimensional matrix structure including threshold values being arranged in a predetermined order by comparing the image density value for the associated process colour for each pixel of the digital image with the corresponding threshold value. When employing stochastic dithering, the threshold values are arranged randomly. In error diffusion, the image density value for a process colour for a pixel is compared with a threshold value. The difference between these two values is distributed over the neighbouring pixels. The sequence of printing signals preferably corresponds to the sequence wherein the respective process colours are applied by the printing unit during image reproduction.

By means of example it will be described how a digital multi-colour image can be reproduced using a digital colour image reproduction system as depicted in fig.1. Suppose for instance that an original multi-colour image is scanned at a resolution of 600dpi x 600dpi resulting in a digital multi-colour image being composed of three separation images respectively of the colours red (R), green (G) and blue (B). The image signals associated with the respective separation images specify for each pixel of the respective colour an image density value using an 8-bit representation. An 8-bit representation enables to define 256 levels each corresponding with a particular tonal value. This digital multi-colour image is forwarded to the image processing system of a complementary digital colour image reproduction system provided with the KRGBCMY process colours. The gamut defined by the six chromatic process colours is divided by the colour processing module for into a plurality of sub-gamuts such that each sub-gamut is defined by a set of three chromatic process colours of the six chromatic process colours. There are numerous ways to perform such a division. In general, when making such a division, the position of the process colours in a predetermined colour space as well as the printing process implemented on the printing unit will be taken into account to determine the best division strategy. It is advantageous to perform the division such that each set of process colours defining a sub-gamut comprises a first process colour selected from the colours Cyan, Magenta and Yellow, and a second process colour selected from the colours Red, Green, Blue, the first process colour and the second process colour being positioned adjacent to each other in a predetermined colour space such as for instance CIE L*a*b*. For instance this could lead to four sub-gamuts defined by the following process colours YGR, GRM, GCM and CMB. As these four sub-gamuts are non-overlapping, for each pixel of the digital multi-colour image only one corresponding sub-gamut can be selected by the colour processing module.

An alternative gamut division strategy will now be explained, which is particularly suited when the printing unit is a complementary printing unit. Therefore, although the invention is clearly not limited thereto, in the sequel reference will only be made to a complementary printing unit. In such a complementary printing unit a multi-coloaar image of marking particles which is composed of a plurality of registered colour separation images is formed so that the marking particles of the respective process colours associated with the respective colour separation images are positioned contiguous to each other rather then in a superimposed relationship. A colour image reproduction system comprising a complementary printing unit is referred to as a complementary multi-colour image reproduction system. Such a complementary printing unit (2) typically comprises an image-carrying member which can be moved cyclically. The image-carrying member may be an image-forming or an image-receiving member. The image-carrying member is an endless member, e.g. a drum or belt, and may have a layered structure. A number of process colours (6) are available on the complementary printing unit. Responsive to a sequence of printing signals the complementary printing unit sequentially forms the respective separation images of marking particles of the corresponding process colour on the image-carrying member. The respective separation images of marking particles are formed complementary. This means that marking particles of a process colour are accumulated on the free surface of the image-carrying member and substantially not on coloured marking particles already accumulated on the image-carrying member. Substantially not means that any superimposed marking particles of different process colours may not lead to visual deficiencies, i.e. visual with the naked human eye, in the finally printed image. After the formation of the registered multi-colour image, the complementary printing unit subsequently transfers the multi-colour image of marking particles, optionally via one or more intermediate members, to a medium where it may be fixed simultaneously or thereafter. The medium can be in web or sheet form and may be composed of e.g. paper, cardboard, label stock, plastic or textile. The intermediate member may be an endless member, such as a belt or drum, which can be moved cyclically. The transfer to the medium or the intermediate member can be by means of pressure or pressure and heat. Dependent on the nature and resistivity of the marking particles the transfer may be assisted electrostatically and/or magnetically and/or by means of a vibration force, e.g. sonically. An example of such a printing unit is disclosed in EP 373704 (Van Stiphout et al), which is hereby incorporated by reference. In this disclosure, the image-carrying member is a cylindrical drum having an outer layer of silicone rubber. Another example is disclosed in US 6,352,806 (Dalal) where the image-carrying member is a belt having a photo-conductive outer layer.

According to this alternate gamut division strategy, the colour processing module (7) divides the colour gamut achievable with the six chromatic process colours RGBYMC into all obtainable sub-gamuts defined by a set three chromatic process colours. This yields the following sub-gamuts: RYG, RYC, RYB, RYM, RGC, RGB, RGM, RCB, RCM, RBM, YGC, YGB, YGM, YCB, YCM, YBM, GCB, GCM, GBM, CBM. The process colours may be specifically adapted for use in a complementary colour image reproduction system and are defined in the CIE-L*a*b* colour space (see Table 1) for a D50 light source and uncoated white paper.

**Table 1**

| **Process colour** | **L* (lightness)** | **a*** | **b*** |
|---|---|---|---|
| Blue | 29 | 18 | -54 |
| Red | 50 | 54 | 41 |
| Green | 52 | -64 | 23 |
| Cyan | 48 | -26 | -36 |
| Magenta | 52 | 64 | -23 |
| Yellow | 90 | -8 | 92 |

Primarily to avoid Moiré, only three screens may be used to render pixels in these sub-gamuts. When processing neighbouring or nearby pixels of a digital colour image, these pixels may slightly differ in colour but the difference may nevertheless be enough to locate them in different sub-gamuts. For instance a first pixel may be located in the GRC sub-gamut, while a second pixel is located in the adjacent YGR sub-gamut. The YGR and the GRC sub-gamut have two chromatic process colours in common. For rendering pixels in the sub-gamuts defined, it is thus advantageous to associate each process colour with a single screen. Preferably in order not to reduce the available colour gamut, it is advantageous to distribute the process colours uniformly over the available screens. By doing so for neighbouring or nearby pixels the transition from one sub-gamut to another adjacent sub-gamut may be effected without a significant visible effect as two out of three chromatic colours are the same and are rendered with the same screens. The limitation to use maximum three screens and the fact that each process colour is associated with a single screen while distributing the process colours uniformly over the available screens imply a reduction of the total number of sub-gamuts which can be selected by the colour processing module.

The unique association of the respective chromatic process colours with the three screens is now further explained. As R and C, and G and M, and Y and B are complementary colours, there are plenty of segments comprising complementary chromatic process colours. We have observed experimentally that the most pleasant grey tone is produced employing the complementary process colours red and cyan. Therefore, the sub-gamuts comprising these process colours are determined being RCM, RCB, RCY and RCG. Subsequently, these four sub-gamuts are ordered with increasing first lightness value. The first lightness value of a sub-gamut is the maximum of the lightness differences between the respective chromatic process colours defining the sub-gamut. For instance for RCM the first lightness value is four (being the difference of the lightness values of Cyan and Magenta, as in Table 1), while for RCB the first lightness value is twenty-one (being the difference between the lightness values of Red and Blue, as in Table 1). This yields the following order: RCM, RCG, RCB, RCY. Then, based on this lightness order each of the respective chromatic process colours is associated with a single one of three different screens. By preference, process colours that are positioned adjacent to each other in the colour space, in this example CIE L*a*b*, are associated with a different screen as otherwise these process colours can not be part of the same sub-gamut which would reduce the colour gamut.
Starting with the sub-gamut with the lowest first lightness value RCM, for instance the first screen may be used to process Red, the second screen may be used to process Cyan, and the third screen may be used to process Magenta. As all process colours of the RCM sub-gamut are associated with a screen, we proceed to the subsequent sub-gamut based on the first lightness value order. This is the RCG sub-gamut. The only process colour not yet associated with a screen is Green. Green is associated with the only available screen, being screen 3 in this example. To distribute the process colours uniformly over the available screens the remaining process colours Yellow and Blue are to be associated with screen 1 and screen 2. By preference, as Red and Yellow are process colours that are positioned adjacent to each other in the colour space, Blue is associated with screen 1, while Yellow is associated with screen 2.
Based on the screen association the twenty sub-gamuts listed before, are reduced to eight sub-gamuts, being RYG, RYM, RGC, RCM, YGB, YBM, GCB, CBM, which in total cover the complete colour gamut determined by all six chromatic process colours and additionally black. For each of these remaining sub-gamuts an associated second lightness value, which is in this example the lightness difference in the CIE L*a*b* colour space between the two chromatic process colours of the sub-gamut defining a plane positioned closest to the lightness axis, is determined. For instance, for the sub-gamut RYG, the two chromatic process colours defining the plane positioned closest to the lightness axis are Red and Green. The (absolute) lightness difference between these two colours (see table 1) equals two, thus the second lightness value for the sub-gamut RYG equals two. For the sub-gamut YGB, the two chromatic process colours defining the plane positioned closest to the lightness axis are Yellow and Blue. The (absolute) lightness difference between these two colours (see table 1) equals 61, thus the second lightness value for the sub-gamut YGB equals 61. The second lightness value can subsequently also be determined for the other six remaining sub-gamuts RYM, RGC, RCM, YBM, GCB, CBM. Eight sub-gamuts remain. In practice, as the medium is usually White, the sub-gamuts effectively are RYGW, YGBW, RYMW, RGCW, RCMW, YBMW, GCBW, CBMW.

Further according to this example, when processing pixels of the original multi-colour image, the analysis module judges for each pixel whether or not an additional process colour is to be added to the set of process colours defining the corresponding sub-gamut of the pixel. In particular, the analysis module determines for each pixel of the digital multi-colour image an area coverage value and, if the area coverage value equals or exceeds a predetermined coverage threshold, a judgement is made to add the additional process colour to the process colours defining the corresponding sub-gamut of said pixel. For instance, the analysis module may determine the area coverage value of a pixel by adding up the image densities values of the pixel, e.g. in RGB. The resulting number is multiplied with 100 and divided by the maximum image density value, thus yielding the area coverage value. Using an 8-bit representation according to this example, the image density values will range from 0 to 255, while the maximum image density value is 255. Suppose the coverage threshold is 50%, then if the area coverage value of the pixel is smaller than the threshold value of 50%, then this pixel will be rendered with the corresponding sub-gamut selected from RYGW, YGBW, RYMW, RGCW, RCMW, YBMW, GCBW, CBMW. In case the area coverage value exceeds the threshold value of 50%, for instance black will be added and thus the pixel will be rendered with the corresponding sub-gamut selected from RYGWK, YGBWK, RYMWK, RGCWK, RCMWK, YBMWK, GCBWK, CBMWK.
When an additional process colour is added to the set of process colours defining a sub-gamut, the same second lightness value remains associated with the extended sub-gamut.

From the eight remaining sub-gamuts, potentially extended with blacK or Blue, the colour processing module determines for each point in the colour space, in this example CIE L*a*b*, those sub-gamuts which contain that point. If the point is contained in more than one sub-gamut, then, based on the second lightness value the colour processing module selects for that point one corresponding sub-gamut. With known techniques a colour management system may be used to map and/or match each pixel of a digital image with a point in this CIE L*a*b* colour space. Thus each pixel can be rendered using up to three out of the six available chromatic process colours and optionally black or blue. Obviously, blue is not added if already contained in the sub-gamut.
Suppose for example a point is contained in two sub-gamuts, e.g. the RYG(W)K and the YGB(W)K sub-gamut. As the second lightness value of the RYG(W)K sub-gamut, being 2, is much lower than that of the YGB(1N)K sub-gamut, being 61, for this point the RYG(W)K sub-gamut will be selected by the colour processing module. Suppose for instance that a pixel of the digital image is mapped and optionally matched on this point, then the image signal generation module of the image processing system converts the three image signals associated with the separation images of the RGB colours into three image signals associated with the separation images of the selected chromatic process colours, being RYG, and an additional image signal associated with the separation images of the additional process colour (blacK). In practice, image signals may be generated for all process colours (KRGBCMY) but the image density values for the colours BCM will be zero for this pixel as these process colours are not part of the selected sub-gamut.

Further to this example the halftoning (also referred to as screening) technique used to convert the RYGK image signals into a corresponding RYGK printing signals is a binary matrix-dither technique. The halftoning is performed using only up to three screens for the chromatic colours, each having a predetermined screen angle. R is screened using screen 1, Y is screened using screen 2, G is screened using screen 3 while an additional screen is provided for the additional black process colour. Each screen is a repetitive pattern of a predetermined matrix structure defining cells with associated image density threshold values. The matrix structure may differ for the respective screens. The size of each cell usually corresponds to the minimum image dot size which can be rendered by the printing unit. A printing signal associated with a separation image of a process colour is generated by comparing the image density value for that process colour for each pixel with a corresponding cell of the selected screen. If the image density value for that process colour for the pixel is equal to or higher than the threshold value of the corresponding cell, the printing signal indicates that an image dot of marking particles of that process colour is to be formed. If the image density value for that process colour for that pixel is below the threshold value, the printing signal indicates that no image dot of marking particles of that process colour is to be formed.

As a complementary image reproduction system can not render image portions with an area coverage value larger than 100%, amounts of the selected chromatic colours are replaced by black or blue in order to be able to adequately render the original image. This replacement is such that the total area coverage value of the rendered image portion is 100%. In the latter case, images can be rendered with only three screens as the last process colour to be printed can be printed by the complementary printing unit without using a screen.

## Claims

1. An image processing system (1) for processing a digital multi-colour image for reproduction thereof on a colour image reproduction system which is provided with at least five process colours defining a gamut, said image processing system comprising:
a colour processing module (7) for dividing the gamut into a plurality of sub-gamuts such that each sub-gamut is defined by a set of three chromatic process colours of the at least five process colours, and for selecting for each pixel of the digital multi-colour image a corresponding sub-gamut of the plurality of sub-gamuts;
an analysis module (10) for judging for each pixel of the digital multi-colour image whether or not to add an additional process colour to the set of process colours defining the corresponding sub-gamut of said pixel; and
a generation module (8) for generating image signals from said digital multi-colour image, each image signal being associated with a digital separation image of a process colour of the plurality of process colours and specifying an image density value for the associated process colour for each pixel of the digital multi-colour image, the image density value for the associated process colour for the pixel being zero if the associated process colour is not part of the set of process colours defining the corresponding sub-gamut,
**characterised in that**
each set of process colours defining a sub-gamut comprises a first process colour selected from the colours Cyan, Magenta and Yellow, and a second process colour selected from the colours Red, Orange, Green, Blue, pink and brown, the first process colour and the second process colour being positioned adjacent to each other in a predetermined colour space.

2. An image processing system as recited in claim 1, wherein the analysis module determines for each pixel of the digital multi-colour image a lightness value and, if the lightness value is smaller than a predetermined lightness threshold, a judgement is made to add the additional process colour to the set of process colours defining the corresponding sub-gamut of said pixel.

3. An image processing system as recited in claim 1, wherein the analysis module determines for each pixel of the digital multi-colour image an area coverage value and, if the area coverage value equals or exceeds a predetermined coverage threshold, a judgement is made to add the additional process colour to the process colours defining the corresponding sub-gamut of said pixel.

4. An image processing system as recited in claims 1 to 3, wherein the additional process colour is a non-white achromatic process colour or blue.

5. An image processing system as recited in any preceding claim, further comprising a conversion module for converting the image signals of the respective process colours into corresponding printing signals by a halftoning technique using at most four different screens and wherein each image signal is converted into a corresponding printing signal using one screen selected from said at most four different screens.

6. An image processing system as recited in any preceding claim, wherein the predetermined coverage threshold is 100%.

7. An image processing system as recited in claim 6, wherein the conversion module converts the image signals into printing signals using at most three different screens

8. A method for processing a digital multi-colour image for reproduction thereof on a colour image reproduction system which is provided with at least five process colours defining a gamut, said method comprising the steps of:
dividing the gamut into a plurality of sub-gamuts such that each sub-gamut is defined by a set of three chromatic process colours of the at least five process colours;
selecting for each pixel of the digital multi-colour image a corresponding sub-gamut of the plurality of sub-gamuts;
judging for each pixel of the digital multi-colour image whether or not to add an additional process colour to the set of process colours defining the corresponding sub-gamut of said pixel; and
generating image signals from said digital multi-colour image, each image signal being associated with a digital separation image of a process colour of the plurality of process colours and specifying an image density value for the associated process colour for each pixel of the digital multi-colour image, the image density value for the associated process colour for the pixel being zero if the associated process colour is not part of the set of process colours defining the corresponding sub-gamut. **characterised in that**
dividing the gamut is executed such that each set of process colours defining a sub-gamut comprises a first process colour selected from the colours Cyan, Magenta and Yellow, and a second process colour selected from the colours Red, Orange, Green, Blue, pink and brown, the first process colour and the second process colour being positioned adjacent to each other in a predetermined colour space.

## Patentansprüche

1. Bildverarbeitungssystem (1) zum Verarbeiten eines digitalen mehrfarbigen Bildes für die Wiedergabe desselben auf einem Farbbildreproduktionssystem, das wenigstens fünf Prozessfarben aufweist, die einen Farbbereich definieren, wobei das Bildverarbeitungssystem aufweist:
ein Farbverarbeitungsmodul (7) zum Aufteilen des Farbbereiches in eine Mehrzahl von Unterbereichen derart, dass jeder Unterbereich durch einen Satz von drei chromatischen Prozessfarben aus den wenigstens fünf Prozessfarben definiert wird, und zum Auswählen eines entsprechenden Unterbereiches aus der Mehrzahl der Unterbereiche für jedes Pixel des digitalen mehrfarbigen Bildes;
ein Analysemodul (10) zum Entscheiden, für jedes Pixel in dem digitalen mehrfarbigen Bild, ob eine zusätzliche Prozessfarbe zu dem Satz der Prozessfarben, die den entsprechenden Unterbereich für dieses Pixel definieren, hinzugefügt werden muss oder nicht, und
ein Erzeugungsmodul (8) zum Erzeugen von Bildsignalen aus dem digitalen mehrfarbigen Bild, wobei jedes Bildsignal einem digitalen Farbauszugsbild in einer Prozessfarbe aus der Mehrzahl der Prozessfarben zugeordnet ist und einen Bilddichtewert für die betreffende Prozessfarbe für jedes Pixel in dem digitalen mehrfarbigen Bild definiert, wobei der Bilddichtewert für die zugehörige Prozessfarbe für das Pixel null ist, wenn die zugehörige Prozessfarbe nicht Teil des Satzes von Prozessfarben ist, die den entsprechenden Unterbereich definieren,
**dadurch gekennzeichnet, dass**
jeder Satz von Prozessfarben, der einen Unterbereich definiert, eine erste Prozessfarbe, die ausgewählt ist aus den Farben Cyan, Magenta und Gelb und eine zweite Prozessfarbe enthält, die ausgewählt ist aus den Farben Rot, Orange, Grün, Blau, Rosa und Braun, wobei die erste Prozessfarbe und die zweite Prozessfarbe in einem vorbestimmten Farbraum benachbart zueinander liegen.

2. Bildverarbeitungssystem nach Anspruch 1, bei dem das Analysemodul für jedes Pixel des digitalen mehrfarbigen Bildes einen Helligkeitswert bestimmt und, wenn der Helligkeitswert kleiner ist als ein vorbestimmter Helligkeitsschwellenwert, eine Entscheidung getroffen wird, die zusätzliche Prozessfarbe zu dem Satz der Prozessfarben hinzuzufügen, die den entsprechenden Unterbereich für dieses Pixel definieren.

3. Bildverarbeitungssystem nach Anspruch 1, bei dem das Analysemodul für jedes Pixel des digitalen mehrfarbigen Bildes einen Flächenbedeckungswert bestimmt und, wenn der Flächenbedeckungswert größer oder gleich einem vorbestimmten Bedeckungsschwellenwert ist, eine Entscheidung getroffen wird, die zusätzliche Prozessfarbe zu den Prozessfarben hinzuzufügen, die den entsprechenden Unterbereich für dieses Pixel definieren.

4. Bildverarbeitungssystem nach Ansprüchen 1 bis 3, bei dem die zusätzliche Prozessfarbe eine nicht weiße achromatische Prozessfarbe oder Blau ist.

5. Bildverarbeitungssystem nach einem der vorstehenden Ansprüche, mit einem Umwandlungsmodul zum Umwandeln der Bildsignale der jeweiligen Prozessfarben in entsprechende Drucksignale durch eine Halbtontechnik unter Verwendung von höchstens vier verschiedenen Masken, wobei jedes Bildsignal unter Verwendung einer Maske, die unter den höchstens vier verschiedenen Masken ausgewählt wurde, in ein entsprechendes Drucksignal umgewandelt wird.

6. Bildverarbeitungssystem nach einem der vorstehenden Ansprüche, bei dem der vorbestimmte Bedeckungsschwellenwert 100% ist.

7. Bildverarbeitungssystem nach Anspruch 6, bei dem das Umwandlungsmodul die Bildsignale unter Verwendung von höchstens drei verschiedenen Masken in Drucksignale umwandelt.

8. Verfahren zum Verarbeiten eines digitalen mehrfarbigen Bildes für die Wiedergabe desselben auf einem Farbbildreproduktionssystem, das wenigstens fünf Prozessfarben aufweist, die einen Farbbereich definieren, welches Verfahren die folgenden Schritte aufweist:
Aufteilen des Farbbereiches in eine Mehrzahl von Unterbereichen derart, dass jeder Unterbereich durch einen Satz von drei chromatischen Prozessfarben unter den wenigstens fünf Prozessfarben definiert wird,
Auswählen, für jedes Pixel des digitalen mehrfarbigen Bildes, eines entsprechenden Unterbereiches aus der Mehrzahl der Unterbereiche,
Entscheiden, für jedes Pixel des digitalen mehrfarbigen Bildes, ob eine zusätzliche Prozessfarbe zu dem Satz der Prozessfarben hinzuzufügen ist, die den entsprechenden Unterraum für dieses Pixel definieren, und
Erzeugen von Bildsignalen aus dem digitalen mehrfarbigen Bild, wobei jedes Bildsignal einem digitalen Farbauszugsbild in einer Prozessfarbe unter der Mehrzahl der Prozessfarben zugeordnet ist und einen Bilddichtewert für die zugehörige Prozessfarbe für jedes Pixel des digitalen mehrfarbigen Bildes spezifiziert, wobei der Bilddichtewert für die zugehörige Prozessfarbe für das Pixel null ist, wenn die zugehörige Prozessfarbe nicht Teil des Satzes der Prozessfarben ist, die den entsprechenden Unterraum definieren,
**dadurch gekennzeichnet, dass**
das Aufteilen des Farbbereiches so ausgeführt wird, dass jeder Satz von Prozessfarben, die einen Unterbereich definieren, eine erste Prozessfarbe, die ausgewählt ist aus den Farben Cyan, Magenta und Gelb, und eine zweite Prozessfarbe enthält, die ausgewählt ist aus den Farben Rot, Orange, Grün, Blau, Rosa und Braun, wobei die erste Prozessfarbe und die zweite Prozessfarbe in einem vorgegebenen Farbraum benachbart zueinander liegen.

## Revendications

1. Système de traitement d'image (1) pour traiter une image multicolore numérique pour sa reproduction sur un système de reproduction d'image en couleurs, qui est pourvu d'au moins cinq couleurs de traitement définissant une gamme, ledit système de traitement d'image comprenant :
un module de traitement de couleurs (7) pour diviser la gamme en une pluralité de sous-gammes tels que chaque sous-gamme soit définie par un jeu de trois couleurs de traitement chromatiques des au moins cinq couleurs de traitement et pour choisir, pour chaque pixel de l'image multicolore numérique, une sous-gamme correspondante de la pluralité de sous-gammes ;
un module d'analyse (10) pour juger, pour chaque pixel de l'image multicolore numérique, s'il faut ou non ajouter une couleur de traitement supplémentaire au jeu de couleurs de traitement définissant la sous-gamme correspondante dudit pixel ; et
un module de génération (8) pour générer des signaux d'image à partir de ladite image multicolore numérique, chaque signal d'image étant associée à une image de séparation numérique d'une couleur de traitement de la pluralité de couleurs de traitement et spécifier une valeur de densité d'image pour la couleur de traitement associée pour chaque pixel de l'image multicolore numérique, la valeur de densité d'image pour la couleur de traitement associée pour le pixel étant de zéro si la couleur de traitement associée ne fait pas partie du jeu de couleurs de traitement définissant la sous-gamme correspondante,
**caractérisé en ce que** :
chaque jeu de couleurs de traitement définissant une sous-gamme comprend une première couleur de traitement choisie parmi les couleurs cyan, magenta et jaune et une seconde couleur de traitement choisie parmi les couleurs rouge, orange, vert, bleu, rose et brun, la première couleur et la seconde couleur de traitement étant positionnées au voisinage l'une de l'autre dans un espace de couleurs prédéterminé.

2. Système de traitement d'image selon la revendication 1, dans lequel le module d'analyse détermine pour chaque pixel de l'image multicolore numérique une valeur de brillance et, si la valeur de brillance est plus petite qu'un seuil de brillance prédéterminé, un jugement est effectué pour ajouter la couleur de traitement supplémentaire au jeu de couleurs de traitement définissant la sous-gamme correspondante dudit pixel.

3. Système de traitement d'image selon la revendication 1, dans lequel le module d'analyse détermine, pour chaque pixel de l'image multicolore numérique, une valeur de couverture de surface et, si la valeur de couverture de surface est égale à un seuil de couverture prédéterminé ou le dépasse, un jugement est effectué pour ajouter la couleur de traitement supplémentaire aux couleurs de traitement définissant la sous-gamme correspondante dudit pixel.

4. Système de traitement d'image selon les revendications 1 à 3, dans lequel la couleur de traitement supplémentaire est une couleur de traitement achromatique non blanche ou bleue.

5. Système de traitement d'image selon l'une quelconque des revendications précédentes, comprenant en outre un module de conversion pour convertir les signaux d'image des couleurs de traitement respectives en signaux d'impression correspondants par une technique de demi-teintes en utilisant au maximum quatre écrans différents et dans lequel chaque signal d'image est converti en un signal d'impression correspondant en utilisant un écran choisi parmi lesdits au maximum quatre écrans différents.

6. Système de traitement d'image selon l'une quelconque des revendications précédentes, dans lequel le seuil de couverture prédéterminé est de 100 %.

7. Système de traitement d'image selon la revendication 6, dans lequel le module de conversion convertit les signaux d'image en signaux d'impression en utilisant au maximum trois écrans différents.

8. Procédé de traitement d'une image multicolore numérique pour sa reproduction sur un système de reproduction d'image en couleurs qui est pourvu d'au moins cinq couleurs de traitement définissant une gamme, ledit procédé comprenant les étapes consistant à :
diviser la gamme en une pluralité de sous-gammes telles que chaque sous-gamme soit définie par un jeu de trois couleurs de traitement chromatiques des au moins cinq couleurs de traitement ;
choisir, pour chaque pixel de l'image multicolore numérique, une sous-gamme correspondante de la pluralité de sous-gammes ;
juger, pour chaque pixel de l'image multicolore numérique, s'il faut ajouter ou non une couleur de traitement supplémentaire au jeu de couleurs de traitement définissant la sous-gamme correspondante dudit pixel ; et
générer des signaux d'image à partir de ladite image multicolore numérique, chaque signal d'image étant associée à une image de séparation numérique d'une couleur de traitement de la pluralité de couleurs de traitement et spécifier une valeur de densité d'image pour la couleur de traitement associée pour chaque pixel de l'image multicolore numérique, la valeur de densité d'image pour la couleur de traitement associée pour le pixel étant de zéro si la couleur de traitement associée ne fait pas partie du jeu de couleurs de traitement définissant la sous-gamme correspondante,
**caractérisé en ce que** :
la division de la gamme est exécutée de sorte que chaque jeu de couleurs de traitement définissant une sous-gamme comprenne une première couleur de traitement choisie parmi les couleurs cyan, magenta et jaune, et une seconde couleur de traitement choisie parmi les couleurs rouge, orange, vert, bleu, rose et brun, la première couleur de traitement et la seconde couleur de traitement étant positionnées au voisinage l'une de l'autre dans un espace de couleurs prédéterminé.
